Europäisches Patentamt

(19) European Patent Office

Office européen des brevets

(11) Veröffentlichungsnummer: **0 022 588**
**B1**

(12) EUROPÄISCHE PATENTSCHRIFT

(45) Veröffentlichungstag der Patentschrift:
01.12.82

(21) Anmeldenummer: 80200526.4

(22) Anmeldetag: 09.06.80

(51) Int. Cl.³: **A 01 D 55/18**

(54) **Mähmesserbefestigung.**

(30) Priorität: 17.07.79 NL 7905549

(43) Veröffentlichungstag der Anmeldung:
21.01.81 Patentblatt 81/3

(45) Bekanntmachung des Hinweises auf die Patenterteilung:
01.12.82 Patentblatt 82/48

(84) Benannte Vertragsstaaten:
AT DE FR NL

(56) Entgegenhaltungen:
DE-A-2 043 264
DE-A-2 612 381
FR-A-1 519 808
FR-A-1 520 653
FR-A-1 562 887
FR-A-2 026 393
FR-A-2 378 437
GB-A-2 001 836
NL-A-7 805 130
US-A-3 014 333

(73) Patentinhaber: Zweegers, Petrus Wilhelmus,
Nieuwendijk 46, NL-5662 AG Geldrop (NL)

(72) Erfinder: Zweegers, Petrus Wilhelmus, Nieuwendijk 46,
NL-5662 AG Geldrop (NL)

(74) Vertreter: Noz, Franciscus Xaverius, Ir. et al,
Boschdijk 155, NL-5612 HB Eindhoven (NL)

Mähmesserbefestigung

Die Erfindung bezieht sich auf eine Vorrichtung zur Befestigung eines Mähmessers an einem um eine zentrale Achse drehbaren Messerträger, wobei jedes Mähmesser mit dem die Schneiden tragenden Ende während der Rotation des Messerträgers über dessen äusseren Rand herausragt und mit dem entgegengesetzten Ende um einen zur Drehachse des Messerträgers wenigstens annähernd parallelen Stift relativ zum Messerträger frei schwenkbar ist, während das nach oben zu durch den Messerträger hindurch und über dessen Oberfläche hinausragende Kopfende des Stifts am auf- und abbewegbaren Ende einer an ihrem entgegengesetzten Ende starr mit dem Messerträger verbundenen Blattfeder befestigt ist.

Aus FR-A-2 026 393 ist eine derartige Vorrichtung zur Befestigung eines Mähmessers bekannt, bei der das Mähmesser unmittelbar drehbar auf dem Stift gelagert ist, während der Stift mittels einer unterhalb des Stifts liegenden Blattfeder unterstützt wird.

Nun werden im Betrieb erhebliche Kräfte auf das Messer ausgeübt durch die Fliehkräfte, verursacht durch die hohe Drehzahl des Messerträgers und durch die vom Erntegut auf das Mähmesser ausgeübten Kräfte, aber auch insbesondere wenn das Messer mit Steinen oder derartigen Gegenständen in Berührung kommt. Unter der Wirkung der auf das Messer ausgeübten Kräfte kann eine Verbiegung der Blattfeder auftreten und dabei das Messer eine derartige Stellung einnehmen, dass es mit unter dem Messerträger liegenden Gestellteilen in Berührung kommen kann. Weiter wird das Mähmesser während des Betriebs dauernd kleinere oder grössere Schwenkbewegungen um den Stift ausführen. Da die auf das Messer ausgeübten Kräfte unmittelbar auf den Stift übertragen werden, besteht die Gefahr einer schnellen Abnutzung des Stifts, wobei im Betrieb ein Bruch des Stifts auftreten und das Messer verloren gehen kann. Dabei besteht auch noch die Gefahr, dass, wenn im Betrieb der Stift abbricht, das Mähmesser weggeschleudert wird und dabei sich in der Nähe der Mähmaschinen befindende Personen verletzen kann.

Die Erfindung beschreibt eine Vorrichtung der oben erwähnten Art, bei der die Nachteile der bekannten Konstruktion vermieden werden können.

Gemäss der Erfindung kann dies dadurch erreicht werden, dass das Ende des Mähmessers von einem Hohlprofil umfasst wird, wobei das Mähmesser und das Hohlprofil über fluchtend verlaufende Löcher vom Stift durchsetzt werden und gemeinsam um diesen schwenkbar sind.

Durch die Benutzung der erfindungsgemässen Konstruktion kann eine solide Verbindung zwischen Mähmesser und Messerträger erreicht werden, wobei wenigstens ein grösserer Teil der auf das Mähmesser ausgeübten Kräfte auf das Hohlprofil übertragen werden und auf einfache Weise eine Entlastung des Stifts zu erreichen ist, ohne dass dabei das Austauschen des Mähmessers behindert wird.

Die Erfindung wird nachstehend anhand einer in beiliegenden Figuren schematisch dargestellten Ausführungsform der Konstruktion nach der Erfindung näher erläutert.

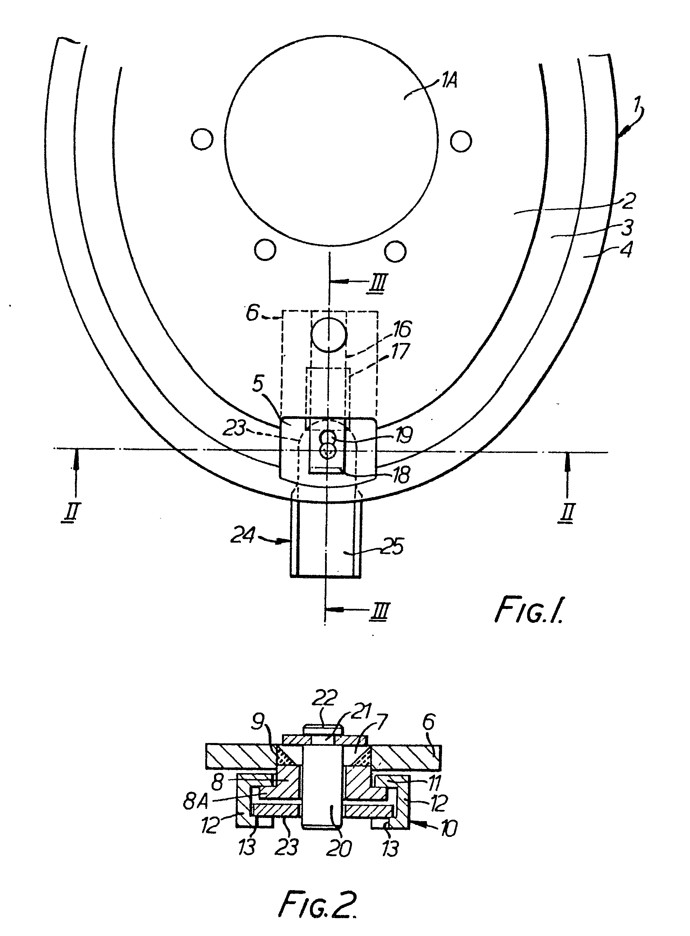

Figur 1 zeigt eine Draufsicht auf ein Mähorgan mit einer Messerbefestigung nach der Erfindung.

Figur 2 zeigt in vergrössertem Massstab einen Schnitt längs der Linie II–II in Figur 1, wobei der Messerträger des Mähorgans weggelassen ist.

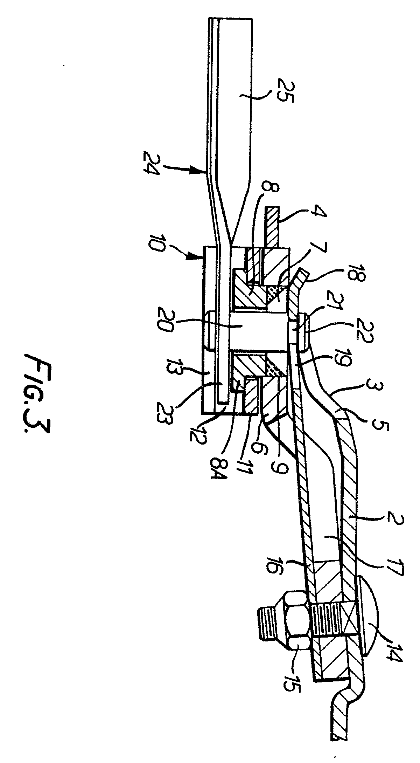

Figur 3 zeigt in vergrössertem Massstab einen Schnitt längs der Linie III–III in Figur 1.

In der in den Figuren dargestellten Ausführungsform enthält das Mähorgan einen plattenförmigen, ovalen Messerträger 1, der ein zentral liegendes Loch 1A zur Befestigung des Messerträgers an einer nicht dargestellten Welle des Mähorgans aufweist. Solche Mähorgane und mit solchen Mähorganen versehene Mähmaschinen sind in der Technik allgemein bekannt, so dass eine weitere Beschreibung sich erübrigt.

Der Messerträger 1 hat einen Mittelteil 2, einen diesen Mittelteil 2 umgebenden, einigermassen nach unten abgebogenen Rand 3 und einen zum Mittelteil 2 mehr oder weniger parallelen, sich an die Unterseite des Randes 3 anschliessenden Aussenrand 4.

Im Messerträger 1 ist eine wenigstens nahezu rechteckige Ausnehmung 5 vorgesehen, die sich im Rand 3 und in den sich daran anschliessenden Teilen des Mittelteils 2 und des Aussenrandes 4 erstreckt. An dem im Rand 4 liegenden, äusseren Begrenzungsrand der Ausnehmung 5 liegt das Ende einer mehr oder weniger S-förmigen am Messerträger 1 befestigten Versteifungsplatte 6. Das andere höher liegende Ende dieser S-förmigen Platte 6 liegt in einem bestimmten Abstand von der Ausnehmung 5 an der Unterseite des Mittelteils 2 des Messerträgers 1.

In dem gegenüber der Ausnehmung 5 liegenden Ende der Versteifungsplatte 6 ist ein Loch 7 vorgesehen, in dessen unterem Teil das obere Ende einer Buchse 8 liegt, die durch eine Schweissverbindung 9 an der Versteifungsplatte 6 befestigt ist. An der Unterseite ist die Buchse 8 mit einem nach aussen vorstehenden Kragen 8A versehen. Um die Buchse 8 ist ein Hohlprofil 10 drehbar. Das Hohlprofil 10 hat einen Steg 11 mit einer Bohrung zur Aufnahme der Buchse 8, so dass der Steg 11 zwischen der Unterseite der Versteifungsplatte 6 und der Oberseite des Kragens 8A eingesperrt und um die Buchse 8 frei drehbar ist. An die Seiten des Stegs 11 schliessen sich mit dem Steg einheitliche, zueinander parallele Schenkel 12 an, die an ihren vom Steg 11 abgewandten Enden mit damit einheitlichen, sich in Richtung aufeinander erstreckenden Flanschen 13 versehen sind.

Ein Befestigungsbolzen 14 ist durch ein in dem Messerträger 1 vorgesehenes Loch und durch ein Loch in dem an der Unterseite des Messerträgers 1 anliegenden am Messerträger 1 befestigten Ende der Versteifungsplatte 6 geführt. Mit Hilfe dieses Befestigungsbolzens 14 und einer auf den Befestigungsbolzen 14 geschraubten Mutter 15 ist gegen die Unterseite der Versteifungsplatte 6 ein Ende einer Blattfeder 16 geklemmt. Die Blattfeder 16 erstreckt sich durch ein in der Versteifungsplatte 6 vorgesehenes Loch 17 in der Weise, dass das vom Bolzen 14 abgewandte Ende der Blattfeder sich über dem in Höhe der Öffnung 5 liegenden Ende der Versteifungsplatte 6 erstreckt. Das vom Befestigungsbolzen 14 abgewandte Ende 18 der Blattfeder ist einigermassen hochgebogen.

In dem vom Bolzen 14 abgewandten Ende der Blattfeder ist ferner eine mehr oder weniger schlüssellochförmige Öffnung 19 in der Weise vorgesehen, dass das dem Bolzen 14 näherliegende Ende dieser Öffnung einen grösseren Durchmesser hat als das weiter vom Bolzen entfernte Ende dieser Öffnung 19.

Ein Stift 20 erstreckt sich durch die Buchse 8 und hat am oberen Ende einen Teil 21, der einen kleineren Durchmesser als der übrige Teil des Stifts 20 aufweist, wobei der dickere Teil des Stifts 20 durch den Teil 21 mit einem Kopf 22 verbunden ist, dessen Durchmesser wenigstens nahezu gleich dem des Stifts 20 ist. Die Ausbildung ist derart, dass in der in den Figuren dargestellten Stellung des Stifts 20 der Teil 21 in dem engeren Teil der Öffnung 19 liegt, wobei Teile der Blattfeder in dem Raum zwischen dem Kopf 22 und dem dickeren Teil des Stifts 20 aufgenommen sind, so dass der Stift 20 vor axialer Verschiebung in Bezug auf die Feder 16 gesichert ist.

Das unter der Buchse 8 herausragende Ende des Stifts 20 ist durch ein Loch in einem Ende 23 eines Mähmessers 24 geführt. Dieses flach ausgebildete Ende 23 des Mähmessers 24 ist unter die Buchse 8 zwischen die Schenkel 12 des Hohlprofils 10 geschoben und ruht auf den Flanschen 13. Der ausserhalb des Hohlprofils 10 und des Randes 4 der Schüssel vorstehende Teil 25 des Mähmessers ist einigermassen verwunden und in an sich bekannter Weise mit einer Schneidkante versehen.

In dieser Weise ergibt sich eine gute Führung des Messers, insbesondere des flachen Endes 23 desselben, mittels des Hohlprofils, das an der Unterseite der Stützplatte 6 entlang geführt wird, so dass Kippen des Messers und somit Beschädigung der unterhalb des Messers liegenden Teile verhütet werden. Die für die das Messer befestigenden Einzelteile erforderliche Bauhöhe ist gering, so dass die Befestigungskonstruktion die Bewegung der Messer nahe über der Bodenfläche nicht behindert.

Die in Betrieb auf das Messer ausgeübten Kräfte werden grösstenteils auf das um die Buchse 8 drehbare Hohlprofil 10 und somit nicht auf den Stift 20 übertragen. Der Stift 20 wird in Betrieb im wesentlichen lediglich auf Abschiebung belastet infolge der auf das Messer wirkenden Zentrifugalkräfte. Das Messer kann sich zwar um den Stift 20 drehen, aber der Drehpunkt des Messers liegt dabei in der Ebene des Messers, in der auch die vom Messer auf den Stift ausgeübten Kräfte wirksam sind, so dass die auf das Messer einwirkenden Zentrifugalkräfte keinen Moment auf den Drehpunkt des Messers ausüben.

Zum Austauschen des Messers braucht man nur den Stift 20 hochzubewegen, was sich einfach durchführen lässt, indem das abgebogene Ende 18 der Blattfeder 16 hochbewegt wird. Wenn das untere Ende des Stifts 20 dann aus dem im Messer 24 vorgesehenen Loch zurückgezogen ist, kann das Ende 23 des Messers aus dem Hohlprofil 10 herausgeschoben und ein entsprechendes Ende eines anderen Messers in das Profil eingeschoben werden, woraufhin man den Stift wieder nach unten in das im Messer vorgesehene Loch führen kann.

Auch der Stift 20 kann im Falle einer Beschädigung oder Abnutzung bequem ersetzt werden, da man nur den Bolzen 14 zu lösen braucht, woraufhin die Blattfeder mit dem damit verbundenen Stift entfernt werden kann. Daraufhin kann der Stift im Loch 19 verschoben werden bis der Kopf 22 in dem dem Bolzen 14 zugewandten Ende des Lochs 19 liegt, welches Ende der Grösse des Kopfes 22 entspricht, so dass in dieser Stellung der Stift aus der Blattfeder 16 herausgenommen und in entsprechender Weise durch einen anderen ersetzt werden kann, woraufhin die Blattfeder 16 wieder mittels des Bolzens 14 an der Schüssel befestigt werden kann.

Aus dem Vorstehenden wird einleuchtend, dass durch die Verwendung der Konstruktion nach der Erfindung eine besonders zweckvolle Messerbefestigung erhalten wird, wobei eine günstige Aufnahme der in Betrieb auf das Messer ausgeübten Kräfte gewährleistet ist.

**Patentansprüche**

1. Vorrichtung zur Befestigung eines Mähmessers (24) an einem um eine zentrale Achse drehbaren Messerträger (1), wobei jedes Mähmesser (24) mit dem die Schneiden tragenden Ende (25) während der Rotation des Messerträgers (1) über dessen äusseren Rand (4) hinausragt und mit dem entgegengesetzten Ende (23) um einen zur Drehachse des Messerträgers (1) wenigstens annähernd parallelen Stift (20) relativ zum Messerträger frei schwenkbar ist, während das nach oben zu durch den Messerträger (1) hindurch und über dessen Oberfläche hinausragende Kopfende (21, 22) des Stifts (20) am auf- und abbewegbaren Ende (18) einer an ihrem entgegengesetzten Ende starr mit dem Messerträger (1) verbundenen Blattfeder (16) befestigt ist, dadurch gekennzeichnet, dass das Ende (23) des Mähmessers (24) von einem Hohlprofil (10) umfasst wird, wobei das Mähmesser (24) und das Hohlprofil (10) über fluchtend verlaufende Löcher vom Stift (20) durchsetzt werden und gemeinsam um diesen schwenkbar sind.

2. Vorrichtung nach Anspruch 1, dadurch gekennzeichnet, dass das Hohlprofil (10) unabhängig vom Stift (20) drehbar um die Mittellinie des Stifts (20) abgestützt ist.

3. Vorrichtung nach Anspruch 1 oder 2, dadurch gekennzeichnet, dass das Hohlprofil (10) um eine Buchse (8) drehbar ist, die unter der Unterseite eines plattenförmigen Teils (6) des Messerträgers (1) herausragt, wobei ein Steg (11) des Hohlprofils (10) zwischen der Unterseite dieses plattenförmigen Teils (6) und einem an der Unterseite der Buchse (8) angebrachten, nach aussen vorstehenden Kragen (8A) eingesperrt ist.

4. Vorrichtung nach einem der vorhergehenden Ansprüche, dadurch gekennzeichnet, dass das Hohlprofil (10) einen Steg (11) und sich an zwei einander gegenüberliegenden Rändern dieses Stegs (11) anschliessende Schenkel (12) enthält, deren vom Steg (11) abgewandte Enden mit einander zugewandten Flanschen (13) zum Abstützen des Mähmessers (24) versehen sind.

5. Vorrichtung nach Anspruch 4, dadurch gekennzeichnet, dass das Ende (23) des Mähmessers (24) zwischen den Flanschen (13) und der Unterseite der Buchse (8) eingesperrt ist, um die das Hohlprofil (10) verdrehbar ist, wobei der Stift (20) durch eine in der Buchse (8) vorgesehene Öffnung derart geführt ist, dass das untere Ende des Stifts (20) in einem im Ende (23) des Mähmessers (24) vorgesehenen Loch liegt.

6. Vorrichtung nach einem der vorhergehenden Ansprüche, dadurch gekennzeichnet, dass nahe dem oberen Ende des Stifts (20) eine ununterbrochene Nut (21) vorgesehen ist und im Ende der Blattfeder (16) eine mehr oder weniger schlüssellochförmige Öffnung (19) vorhanden ist in der der die Nut (21) aufweisende Teil des Stifts (20) verschiebbar ist, derart, dass in einer ersten Lage des Stifts (20) in der Öffnung (19) der Stift (20) vor axialer Verschiebung in Bezug auf die Blattfeder (16) gesichert ist und in einer zweiten Lage in der Öffnung (19) der Stift (20) von der Blattfeder (16) gelöst werden kann.

7. Vorrichtung nach einem der vorhergehenden Ansprüche 3–6, dadurch gekennzeichnet, dass der plattenförmige Teil (6) mehr oder weniger S-förmig ausgebildet ist und das die Buchse (8) aufnehmende Ende des plattenförmigen Teils (6) in der Nähe einer Ausnehmung (5) im Messerträger (1) liegt, während das andere Ende des plattenförmigen Teils (6) gemeinsam mit einem Ende der Blattfeder (16) an einem höher liegenden Teil (2) des Messerträgers (1) anliegt, wobei die Blattfeder (16) durch ein in diesem plattenförmigen Teil (6) vorgesehenes Loch (17) geführt ist.

**Revendications**

1. Dispositif de fixation de couteaux de faucheuse, sur un porte-couteau (1) tournant par rapport à un axe central; chaque couteau de fauche (24) ayant son extrémité coupante (25) en saillie au-delà de la bordure extérieure (4) du porte-couteau en rotation, et l'extrémité opposée (23) du couteau étant montée librement, de manière pivotante, sur un axe de fixation (20) sensiblement parallèle à l'axe de rotation du porte-couteau; l'axe de fixation (20) comportant une extrémité supérieure (21, 22) en saillie vers le haut, qui traverse le porte-couteau (1) au-delà de la face supérieure de celui-ci; cette extrémité supérieure de l'axe (20) se trouvant fixée à l'extrémité libre (18) mobile verticalement d'un ressort à la lame (16), dont l'extrémité opposée est rigidement fixée au porte-couteau (1); dispositif caractérisé en ce que l'extrémité interne (23) du couteau de fauche (24) est logée dans un profilé creux (10), et en ce que le couteau de fauche (24) et le profilé creux (10) sont percés de deux trous en coïncidence pour le passage de l'axe de fixation (20), autour duquel le couteau et le profilé peuvent pivoter librement.

2. Dispositif selon la revendication 1, caractérisé en ce que le profilé creux (10) peut pivoter par rapport à l'axe géométrique de l'axe de fixation (20), en s'appuyant sur un support indépendant de celui-ci.

3. Dispositif selon l'une des revendications 1 ou 2, caractérisé en ce que le profilé creux (10) est monté de manière pivotante autour d'une douille (8) en saillie sous une pièce (6) en forme de plaque solidaire du porte-couteau (1); le profilé creux (10) comportant un dos (11), retenu entre la face inférieure de la pièce (6) en forme de plaque, et un collet (8A) en saillie vers l'extérieur à la partie inférieure de la douille (8).

4. Dispositif selon l'une des revendications 1 à 3, caractérisé en ce que le profilé creux (10) comporte un dos (11), et deux ailes symétriques (12) raccordées aux bords opposés du dos (11); ces deux ailes (12) portant, à leurs extrémités opposées au dos (11), des lèvres (13) dirigées l'une vers l'autre pour soutenir le couteau de fauche (24).

5. Dispositif selon la revendication 4, caractérisé en ce que l'extrémité interne (23) du couteau de fauche (24) est retenue entre les lèvres (13) du profilé creux et la face inférieure de la douille (8), par rapport à laquelle le profilé creux (10) peut pivoter; l'axe de fixation (20) passant dans un trou ménagé dans la douille (8) de telle manière que l'extrémité inférieure de l'axe (20) est engagée dans un trou de l'extrémité interne (23) du couteau de fauche (24).

6. Dispositif selon l'une des revendications 1 à 5, caractérisé en ce que l'axe de fixation (20) comporte à son extrémité supérieure une gorge (21), coopérant avec une échancrure (19) sensiblement profilée en trou de serrure, à l'extrémité du ressort à lame (16); l'extrémité supérieure de l'axe de fixation (20) qui porte la gorge (21) pouvant glisser dans l'échancrure (19) du ressort, de manière à immobiliser l'axe de fixation (20) par rapport au ressort (16), dans une première position, et à libérer l'axe de fixation (20) par rapport au ressort à lame (16), dans une seconde position de la partie supérieure de l'axe (20).

7. Dispositif selon l'une des revendications 3 à 6, caractérisé en ce que la pièce en forme de plaque (6) présente sensiblement un profil en S; et en ce que l'extrémité de la pièce en forme de plaque (6), à laquelle est fixée la douille (8), se trouve située en regard d'une échancrure (5) du porte-couteau (1); l'autre extrémité de la pièce en forme de plaque (6), ainsi qu'une extrémité du ressort à lame (16), se trouvant fixées à la partie supérieure (2) du porte-couteau; et le ressort à lame (16) passant à cet effet à travers une échancrure (17) ménagée dans la pièce en forme de plaque (6).

**Claims**

1. Device for mounting a mowing knife (24) on a knife carrier (1) rotatable about a central axis, whereby during rotation of the knife carrier (1) each mowing knife (24) with the end (25) carrying the cutting edges extends beyond the outer edge (4) thereof and with the opposite end (23) being freely rotatable with respect to the knife carrier about a pin (20) at least substantially parallel to the axis of rotating of the knife carrier (1), whilst the head end (21, 22) o of the pin (20) extending upwardly through the knife carrier (1) and above the upper surface thereof has been fixed to the end (18) of a leaf spring said end being movable up and down and the opposite end being fixed to the knife carrier (1) characterised in that the end (23) of the mowing knife is embraced by a hollow profile (10), whereby through the mowing knife (24) and the hollow profile (10) there extends in holes being in line with each other a pin about which they are pivotable in common.

2. Device according claim 1, characterised in that the hollow profile (10) has been supported pivotable about the axis of the pin (20) indepedently of the pin (20).

3. Device, according claim 1 or 2, characterised in that the hollow profile (10) is rotatable about a bush (8) protruding below the lower side of a plate shaped part (6) of the knife carrier (1), whereby a rib (11) of the hollow profile (10) has been snadwiched between the lower side of said plate shaped part (6) and an outwardly exten shaped part (6) and an outwardly extending collar (8A) provided at the lower end of the bush (8).

4. Device according one of the preceding claims characterised in that the hollow profile (10) comprises a rib (11) and two legs (12) joining opposite edges of the rib (11) and having at the ends remote from the rib (11) flanges (13) extending towards each other for supporting the mowing knife (24).

5. Device according claim 4, characterised in that the end (23) of the mowing knife (24) has been sandwiched between the flanges (13) and the lower side of the bush (8) where about the hollow profile (10) is pivotable whereby the pin (20) has been guided through an opening provided in the bush (8) so that the lower end of the pin (20) lies in an aperture provided in the end (23) of the mowing knife.

6. Device according one of the preceding claims characterised in that near the upper end of the pin (20) there has been provided an uninterrupted groove (21) and in the end of the leaf spring there is a more or less keyhole-shaped aperture (19) wherein is shiftable the part of the pin (20) having the groove (21) so that in a first position of the pin (20) in the aperture (19) the pin is locked against axial shifting with respect to the leaf spring (16) and in a second position in the aperture (19) the pin (20) can be made free of the leaf spring (16).

7. Device according one of the preceding claims 3–6, characterised in that the plate shaped part (6) has been made more or less S shaped and the end of the plate shaped part (6) accomodating the bush (8) lies near an aperture (5) in the knife carrier (1) whilst the other end of the plate shaped part (6) together with an end of the leaf spring abuts a part (2) of the knife carrier lying higher, whereby the leaf spring (16) has been guided through a hole (17) provided in said plate shaped part (6).

0 022 588

"1/2"

FIG.1.

FIG.2.

7

*Fig.3.*